# EUROPEAN PATENT APPLICATION

(11) **EP 3 570 583 A1**
(43) Date of publication of application: **20.11.2019**
(21) Application number: 17891811.6
(22) Date of filing: 13.12.2017
(51) Int. Cl.: H04W 24/02

(54) **DETECTION METHOD AND APPARATUS FOR IDENTIFYING FALSE DETECTION CAUSED BY INTERFERENCE, AND BASE STATION**

(30) Priority: 11.01.2017 CN 201710019555
(71) Applicant: ZTE Corporation, Shenzhen, Guangdong 518057 (CN)
(72) Inventor: REN, Weixian, Shenzhen, Guangdong 518057 (CN); XU, Ying, Shenzhen, Guangdong 518057 (CN); XU, Ying, Shenzhen Guangdong 518057 (CN)
(74) Representative: Aipex B.V.
(86) International application number: PCT/CN2017/115792
(87) International publication number: WO 2018/130037

(57) **Abstract**

Disclosed is a detection method for identifying false detection caused by interference. The method includes: setting a first mother code set, a second mother code set and a preset SNR threshold for a PRACH; sending the first mother code set to a user equipment (UE), and receiving a PRACH signal sent by the UE; in case of determining that the PRACH signal is a valid PRACH signal according to the first mother code set, performing a detection on the PRACH signal and the second mother code set and obtaining an SNR of a corresponding PRACH signal peak higher than a preset peak threshold; and determining whether the PRACH signal is an interference signal causing false detection according to the SNR of the PRACH signal peak and the preset SNR threshold. Also disclosed are an apparatus and a base station.

## Description

### TECHNICAL FIELD

The present invention relates to a technical field of wireless communications and, in particular, to a detection method and apparatus for identifying false detection caused by interference, and a base station.

### BACKGROUND

A physical random access channel (PRACH) in Long Term Evolution (LTE) is used for random access of a user equipment (UE). In practical application, false detection easily occurs when a base station detects the PRACH. There are various reasons causing the false detection and one main reason is signal interference.

Generally, the false detection may be reduced by raising a PRACH detection threshold and raising an initial power of the UE accessing the PRACH. However, raising the threshold may raise an omission ratio of PRACH detection by the base station, and decrease the success rate of UE access, which not only results in the waste of uplink bandwidth, but also results in the decrease of system capacity.

### SUMMARY

In view of this, embodiments of the present invention expect to provide a detection method and apparatus for identifying false detection caused by interference, and a base station, so as to suppress the false detection caused by the interference to a certain extent without raising the PRACH detection threshold, thereby reducing the false detection without reducing the user's access success rate.

An embodiment of the present invention provides a detection method for identifying false detection caused by interference. The method includes:
setting a first mother code set, a second mother code set and a preset signal-to-noise ratio, SNR, threshold for a physical random access channel, PRACH;
sending the first mother code set to a user equipment, UE, and receiving a PRACH signal sent by the UE;
in case of determining that the PRACH signal is a valid PRACH signal according to the first mother code set, performing a detection on the PRACH signal and the second mother code set, and obtaining an SNR of a corresponding PRACH signal peak higher than a preset peak threshold; and
determining whether the PRACH signal is an interference signal causing a false detection according to the SNR of the PRACH signal peak and the preset SNR threshold.

In the above solution, the first mother code set includes N mother codes in a mother code sequence, and the second mother code set includes M mother codes in the mother code sequence other than the N mother codes, where N is less than M, and N and M are natural numbers.

In the above solution, the the determining whether the PRACH signal is the interference signal causing the false detection according to the SNR of the PRACH signal peak and the preset SNR threshold includes:
determining whether the SNR of the PRACH signal peak is higher than or equal to the preset SNR threshold;
if the SNR of the PRACH signal peak is higher than or equal to the preset SNR threshold, determining that the PRACH signal is a normal signal; and
if the SNR of the PRACH signal peak is lower than the preset SNR threshold, determining that the PRACH signal is the interference signal causing the false detection..

In the above solution, after the determining that the PRACH signal is the interference signal causing the false detection, the method further includes:
determining that a detection result is the false detection, and reporting the detection result of the false detection to a server.

In the above solution, after the determining that the PRACH signal is the normal signal, the method further includes:
determining that a detection result is a non-false detection, encapsulating the detection result of the non-false detection in a message, and broadcasting the message through a downlink channel.

In the above solution, the determining that the PRACH signal is the valid PRACH signal according to the first mother code set includes:
performing a correlation detection on the PRACH signal and the first mother code set to obtain a first time domain correlation value sequence; and
comparing each correlation value in the first time domain correlation value sequence with the preset peak threshold independently, determining whether the first time domain correlation value sequence has a correlation value higher than the preset peak threshold, and if the first time domain correlation value sequence has the correlation value higher than the preset peak threshold, determining that the PRACH signal is the valid PRACH signal.

In the above solution, the performing the detection on the PRACH signal and the second mother code set and the obtaining the SNR of the corresponding PRACH signal peak higher than the preset peak threshold include:
performing a correlation detection on the PRACH signal and the second mother code set to obtain a second time domain correlation value sequence; and
comparing each correlation value in the second time domain correlation value sequence with the preset peak threshold independently, determining whether the second time domain correlation value sequence has a correlation value higher than the preset peak threshold, and if the second time domain correlation value sequence has the correlation value higher than the preset peak threshold, obtaining, through calculation, the SNR of a PRACH signal peak corresponding to the correlation value higher than the preset peak threshold..

In the above solution, the setting the first mother code set and the second mother code set for the PRACH includes:
under a condition of co-frequency networking of K cells, setting first mother code sets of the K cells according to a mother code sequence of the PRACH, where each of the first mother code sets of the K cells includes no repeated mother code, and K is a positive integer greater than or equal to 3; and
according to a combination set of first mother code sets of adjacent K-1 cells of a current cell, obtaining a second mother code set corresponding to the current cell.

In the above solution, the setting the first mother code set and the second mother code set for the PRACH includes:
setting the first mother code set and the second mother code set randomly for the PRACH within a preset time period.

The present invention provides an apparatus. The apparatus includes a setting module, a transceiving module, a detection module and a determination module.

The setting module is configured to set a first mother code set, a second mother code set and a preset SNR threshold for a PRACH.

The transceiving module is configured to send the first mother code set to a UE, and receive a PRACH signal sent by the UE.

The detection module is configured to, in case of determining that the PRACH signal is a valid PRACH signal according to the first mother code set, perform a detection on the PRACH signal and the second mother code set and obtain an SNR of a corresponding PRACH signal peak higher than a preset peak threshold.

The determination module is configured to determine whether the PRACH signal is an interference signal causing false detection according to the SNR of the PRACH signal peak and the preset SNR threshold.

In the above solution, the first mother code set includes N mother codes in a mother code sequence, and the second mother code set includes M mother codes in the mother code sequence other than the N mother codes, where N is less than M, and N and M are natural numbers.

In the above solution, the determination module is configured to:
determine whether the SNR of the PRACH signal peak is higher than or equal to the preset SNR threshold;
if the SNR of the PRACH signal peak is higher than or equal to the preset SNR threshold, determine that the PRACH signal is a normal signal; and
if the SNR of the PRACH signal peak is lower than the preset SNR threshold, determine that the PRACH signal is the interference signal causing the false detection.

In the above solution, the transceiving module is further configured to determine that a detection result is the false detection, and report the detection result of false detection to a server.

In the above solution, the transceiving module is further configured to determine that a detection result is non-false detection, encapsulate the detection result of non-false detection in a message, and broadcast the message through a downlink channel.

In the above solution, the apparatus further includes a judgement module.

The judgement module is configured to:
perform a correlation detection on the PRACH signal and the first mother code set to obtain a first time domain correlation value sequence; and
compare each correlation value in the first time domain correlation value sequence with the preset peak threshold independently, determine whether the first time domain correlation value sequence has a correlation value higher than the preset peak threshold, and if the first time domain correlation value sequence has the correlation value higher than the preset peak threshold, determine that the PRACH signal is the valid PRACH signal.

In the above solution, the judgement module is configured to:
perform a correlation detection on the PRACH signal and the second mother code set to obtain a second time domain correlation value sequence; and
compare each correlation value in the second time domain correlation value sequence with the preset peak threshold independently, determine whether the second time domain correlation value sequence has a correlation value higher than the preset peak threshold, and if the second time domain correlation value sequence has the correlation value higher than the preset peak threshold, obtain, through calculation, an SNR of a PRACH signal peak corresponding to the correlation value higher than the preset peak threshold.

In the above solution, the setting module may be configured to, under a condition of co-frequency networking of K cells, set first mother code sets of the K cells according to a mother code sequence of the PRACH, where each of the first mother code sets of the K cells includes no repeated mother code, and K is a positive integer greater than or equal to 3; and according to a combination set of first mother code sets of adjacent K-1 cells of a current cell, obtain a second mother code set corresponding to the current cell.

In the above solution, the setting module may be configured to set the first mother code set and the second mother code set randomly for the PRACH within a preset time period.

An embodiment provides a base station. The base station includes an interface, a bus, a memory and a processor. The interface, the memory and the processor are connected through the bus. The memory is configured to store instructions. The processor reads the instructions to:
set a first mother code set, a second mother code set and a preset signal-to-noise ratio, SNR, threshold for a physical random access channel, PRACH;
send the first mother code set to a user equipment, UE, and receive a PRACH signal sent by the UE;
in case of determining that the PRACH signal is a valid PRACH signal according to the first mother code set, perform a detection on the PRACH signal and the second mother code set and obtain an SNR of a corresponding PRACH signal peak higher than a preset peak threshold; and
determine whether the PRACH signal is an interference signal causing a false detection according to the SNR of the PRACH signal peak and the preset SNR threshold.

In the above solution, the first mother code set includes N mother codes in a mother code sequence, and the second mother code set includes M mother codes in the mother code sequence other than the N mother codes, where N is less than M, and N and M are natural numbers.

In the above solution, the processor reads the instructions to:
determine whether the SNR of the PRACH signal peak is higher than or equal to the preset SNR threshold;
if the SNR of the PRACH signal peak is higher than or equal to the preset SNR threshold, determine that the PRACH signal is a normal signal; and
if the SNR of the PRACH signal peak is lower than the preset SNR threshold, determine that the PRACH signal is the interference signal causing the false detection.

In the above solution, the processor further reads the instructions to:
determine that a detection result is the false detection, and report the detection result of false detection to a server.

In the above solution, the processor further reads the instructions to:
determine that a detection result is non-false detection, encapsulate the detection result of non-false detection in a message, and broadcast the message through a downlink channel.

In the above solution, the processor reads the instructions to:
perform a correlation detection on the PRACH signal and the first mother code set to obtain a first time domain correlation value sequence; and
compare each correlation value in the first time domain correlation value sequence with the preset peak threshold independently, determine whether the first time domain correlation value sequence has a correlation value higher than the preset peak threshold, and if the first time domain correlation value sequence has the correlation value higher than the preset peak threshold, determine that the PRACH signal is the valid PRACH signal.

In the above solution, the processor further reads the instructions to:
perform a correlation detection on the PRACH signal and the second mother code set to obtain a second time domain correlation value sequence; and
compare each correlation value in the second time domain correlation value sequence with the preset peak threshold independently, determine whether the second time domain correlation value sequence has a correlation value higher than the preset peak threshold, and if the second time domain correlation value sequence has the correlation value higher than the preset peak threshold, obtain, through calculation, an SNR of a PRACH signal peak corresponding to the correlation value higher than the preset peak threshold.

In the above solution, the processor reads the instructions to:
under a condition of co-frequency networking of K cells, set first mother code sets of the K cells according to a mother code sequence of the PRACH, where each of the first mother code sets of the K cells includes no repeated mother code, and K is a positive integer greater than or equal to 3; and
according to a combination set of first mother code sets of adjacent K-1 cells of a current cell, obtain a second mother code set corresponding to the current cell.

In the above solution, the processor reads the instructions to:
set the first mother code set and the second mother code set randomly for the PRACH within a preset time period.

An embodiment of the present invention further provides a computer-readable storage medium, which is configured to store computer-executable instructions for executing the method described above.

In the detection method and apparatus for identifying false detection caused by interference and a base station provided in the embodiments of the present invention, a first mother code set, a second mother code set and a preset SNR threshold are set for a PRACH; the first mother code set is sent to a UE, and a PRACH signal sent by the UE is received; in case of determining that the PRACH signal is a valid PRACH signal according to the first mother code set, a detection is performed on the PRACH signal and the second mother code set and an SNR of a corresponding PRACH signal peak higher than a preset peak threshold is obtained; and whether the PRACH signal is an interference signal causing false detection is determined according to the SNR of the PRACH signal peak and the preset SNR threshold. Compared with the related art, the present invention performs detection using an unconfigured mother code and a received signal to judge whether it is false detection, and identifies false detection caused by interference using the principle of low correlation between random access preamble sequences and high correlation between interference and multiple random access preamble sequences, which may suppress the false detection caused by the interference to a certain extent without raising the SNR detection threshold of the PRACH signal peak, thereby effectively improving the UE access success rate, avoiding the uplink bandwidth waste, and saving the system capacity.

### BRIEF DESCRIPTION OF DRAWINGS

FIG. 1 is a flowchart of a detection method for identifying false detection caused by interference according to an embodiment one of the present invention;
FIG. 2 is a flowchart of a detection method for identifying false detection caused by interference according to an embodiment two of the present invention;
FIG. 3 is a schematic diagram one of co-frequency networking of multiple cells of a detection method for identifying false detection caused by interference according to the present invention;
FIG. 4 is a schematic diagram two of co-frequency networking of multiple cells of a detection method for identifying false detection caused by interference according to the present invention;
FIG. 5 is a data diagram one of scenario one of a detection method for identifying false detection caused by interference according to the present invention;
FIG. 6 is a data diagram two of scenario one of a detection method for identifying false detection caused by interference according to the present invention;
FIG. 7a is a data diagram three of scenario one of a detection method for identifying false detection caused by interference according to the present invention;
FIG. 7b is a data diagram four of scenario one of a detection method for identifying false detection caused by interference according to the present invention;
FIG. 7c is a data diagram five of a scenario one of a detection method for identifying false detection caused by interference according to the present invention;
FIG. 8 is a data diagram of scenario two of a detection method for identifying false detection caused by interference according to the present invention;
FIG. 9 is a structural diagram of an apparatus according to an embodiment of the present invention; and
FIG. 10 is a structural diagram of a base station according to an embodiment of the present invention.

### DETAILED DESCRIPTION

Technical solutions in embodiments of the present invention will be described clearly and completely in conjunction with drawings in the embodiments of the present invention.

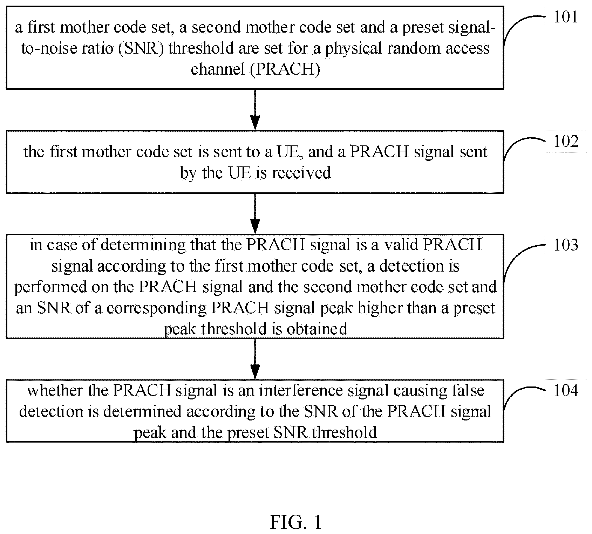

FIG. 1 is a flowchart of a detection method for identifying false detection caused by interference according to of an embodiment one the present invention. As shown in FIG. 1, the detection method for identifying false detection caused by interference provided by the embodiment of the present invention may be applied to a detection apparatus for identifying false detection caused by interference. The apparatus may be a base station. The method includes steps 101 to 104 described below.

In step 101, a first mother code set, a second mother code set and a preset signal-to-noise ratio (SNR) threshold are set for a physical random access channel (PRACH).

The base station randomly sets a first mother code set and a second mother code set for a PRACH according to a mother code sequence of the PRACH, and the base station sets a preset SNR threshold. The first mother code set includes N mother codes in the mother code sequence, and the second mother code set includes M mother codes in the mother code sequence other than the N mother codes. N is less than M, and N and M are natural numbers. The first mother code set is used for random access of a user equipment (UE), and the second mother code set is used for performing detection for false detection on a feedback signal of the UE.

The preset SNR threshold may be set according to actual requirements, which is not limited herein.

The base station may randomly set the first mother code set and the second mother code set for the PRACH according to the mother code sequence of the PRACH within a preset time period. Since the interference also changes with time, the base station may randomly re-set the first mother code set and the second mother code set for the PRACH in the mother code sequence of the PRACH at regular intervals, so that the detection for false detection may be more comprehensively performed.

In the Long Term Evolution (LTE) protocol, the PRACH has 838 kinds of mother codes, and the mother codes have very low correlation with each other. If a PRACH signal detected by the base station from received data is fed back by the UE according to an indication of the base station, the correlation between the PRACH signal and mother codes configured by the base station must be high, and the correlation between the PRACH signal and unconfigured mother codes must be low. For an interference signal, since the mother codes are all Zadoff-Chu (ZC) sequences with similar properties, the correlation between the interference and multiple mother codes may be high.

The ZC sequence is proposed by Zadoff and Chu. It is a kind of constant amplitude zero auto-corelation (CAZAC) sequence, that is, it is a sequence with constant amplitude and zero auto-correlation. This sequence has good auto-correlation and stable amplitude. A primary sync signal uses the ZC sequence as a transmit sync signal for UE detection.

The first mother code set, i.e., preamble sequences in the PRACH, is generated by cyclic shift of the ZC sequence. The preamble sequences in the PRACH are derived from root sequence of one ZC sequence or root sequences of more ZC sequences, the sequence length is 839, and the spacing of subcarriers in the PRACH is 1.25K. One cell has 64 preamble sequences, the network side configures available preamble sequences in the cell, a first ZC root sequence is broadcasted through a parameter, rootSequenceIndex whose value ranging from 0 to 837, in an SIB 2, cyclic shift is performed on the root sequence according to a certain rule, and subsequently corresponding PRACH preamble sequences are generated.

Due to the out-of-sync and different transmission delays of PRACH uplink transmissions, enough spacing is required between corresponding cyclic shifts, and not all the cyclic shifts can be used as orthogonal sequences. If the number of preamble sequences of available cyclic shifts is less than 64, a next ZC root sequence is selected according to a certain rule, and a new PRACH preamble sequence is generated through cyclic shift.

For example, the first mother code set includes N=3 mother codes in the mother code sequence of the PRACH, i.e., {436, 437, 438}, and the second mother code set includes M=6 mother codes in the mother code sequence other than the three mother codes, i.e., {14, 22, 30, 548, 627}. Values of N and M may be set according to actual requirements, which are not limited herein.

In step 102, the first mother code set is sent to a UE, and a PRACH signal sent by the UE is received.

The base station sends the first mother code set in step 101 to the UE, and the UE randomly selects mother codes from the first mother code set and performs random access with the base station according to the selected mother codes. That is, the UE sends a fed back PRACH signal to the base station, and the base station receives the PRACH signal sent from the UE.

In step 103, in case of determining that the PRACH signal is a valid PRACH signal according to the first mother code set, a detection is performed on the PRACH signal and the second mother code set and an SNR of a corresponding PRACH signal peak higher than a preset peak threshold is obtained.

Before the step 103, after the base station receives the PRACH signal sent from the UE, the base station may determine whether the received PRACH signal is a valid PRACH signal according to the first mother code set. The base station first performs a correlation detection according to the first mother code set and the received PRACH signal to obtain a first time domain correlation value sequence; and then, each correlation value in the first time domain correlation value sequence is compared with the preset peak threshold independently, whether the first time domain correlation value sequence has a correlation value higher than the preset peak threshold is determined, and if the first time domain correlation value sequence has a correlation value higher than the preset peak threshold, it is determined that the PRACH signal is the valid PRACH signal; and if the first time domain correlation value sequence has no correlation value higher than the preset peak threshold, it is determined that the PRACH signal is not the valid PRACH signal.

When it is determined that the PRACH signal is the valid PRACH signal according to the first mother code set, a correlation detection is performed on the PRACH signal and the second mother code set and the SNR of the corresponding PRACH signal peak higher than the preset peak threshold is obtained through calculation. The base station first perform the correlation detection on the PRACH signal and the second mother code set to obtain a second time domain correlation value sequence; and then each correlation value in the second time domain correlation value sequence is compared with the preset peak threshold independently, whether the second time domain correlation value sequence has a correlation value higher than the preset peak threshold is determined, and if the second time domain correlation value sequence has a correlation value higher than the preset peak threshold, the SNR of a PRACH signal peak corresponding to the correlation value higher than the preset peak threshold is calculated; and if the second time domain correlation value sequence has no correlation value higher than the preset peak threshold, the related SNR is not calculated.

Finally, the SNR of the PRACH signal peak is obtained.

The preset peak threshold may be set according to actual requirements, which is not limited herein.

An approach for correlation detection is as follows: after the base station performs a complex conjugate point multiplication on the received PRACH signal sent by the UE and a local mother code frequency domain sequence, the base station performs inverse Fourier transform to the time domain and calculates the modulo square to obtain a time domain correlation value sequence, each point of such sequence is compared with a preset detection threshold for a PRACH signal peak, and a point higher than the preset detection threshold is determined to be the PRACH signal peak passing through the preset detection threshold.

An approach for calculating the SNR is as follows: in the time domain correlation value sequence obtained in correlation detection, PRACH signal peak points are removed to generate a noise sequence, a noise power is estimated through the noise sequence, and then the corresponding SNR of the detected PRACH signal peak is obtained by dividing the power of the PRACH signal peak by the noise power.

In step 104, whether the PRACH signal is an interference signal causing false detection is determined according to the SNR of the PRACH signal peak and the preset SNR threshold.

The base station performs comparison and determination according to the obtained SNR of the PRACH signal peak and the preset SNR threshold, and determines whether the SNR of the PRACH signal peak is higher than or equal to the preset SNR threshold. If the SNR of the PRACH signal peak is higher than or equal to the preset SNR threshold, it is determined that the PRACH signal is a normal signal. That is, it is determined that the detection result of detecting the PRACH signal is normal and real and is non-false detection, that is, it is determined that the PRACH signal is not an interference signal causing false detection. After that, the base station encapsulates the detection result of non-false detection in a message and broadcasts the message through a downlink channel, and the UE sending the PRACH signal will continue the subsequent access process according to the protocol process after the UE hears this message. That is, the base station will allocate an uplink bandwidth to the UE for normal communication. If the SNR of the PRACH signal peak is lower than the preset SNR threshold, it is determined that the PRACH signal is an interference signal. That is, it is determined that the detection result of detecting the PRACH signal is abnormal and is non-false detection, that is, it is determined that the PRACH signal is an interference signal causing false detection. After that, the base station considers that no PRACH signal is detected and reports the detection result of false detection to a server, the server counts the detection result of false detection to reflect an interference level of the base station system PRACH signal, and then the base station continues to perform a next PRACH signal detection.

In the detection method for identifying false detection caused by interference provided in the embodiments of the present invention, the base station sets a first mother code set, a second mother code set and a preset SNR threshold for a PRACH; sends the first mother code set to a UE, and receives a PRACH signal sent by the UE; in case of determining that the PRACH signal is a valid PRACH signal according to the first mother code set, performs a detection on the PRACH signal and the second mother code set and obtains an SNR of a corresponding PRACH signal peak higher than a preset peak threshold; and determines whether the PRACH signal is an interference signal causing false detection according to the SNR of the PRACH signal peak and the preset SNR threshold. Compared with the related art, the present invention performs detection using an unconfigured mother code and the received PRACH signal to determine whether it is false detection, and identifies false detection caused by interference using the principle of low correlation between random access preamble sequences and high correlation between interference and multiple random access preamble sequences, which may suppress the false detection caused by the interference to a certain extent without raising the SNR detection threshold of the PRACH signal peak, thereby effectively improving the UE access success rate, avoiding the uplink bandwidth waste, and saving the system capacity.

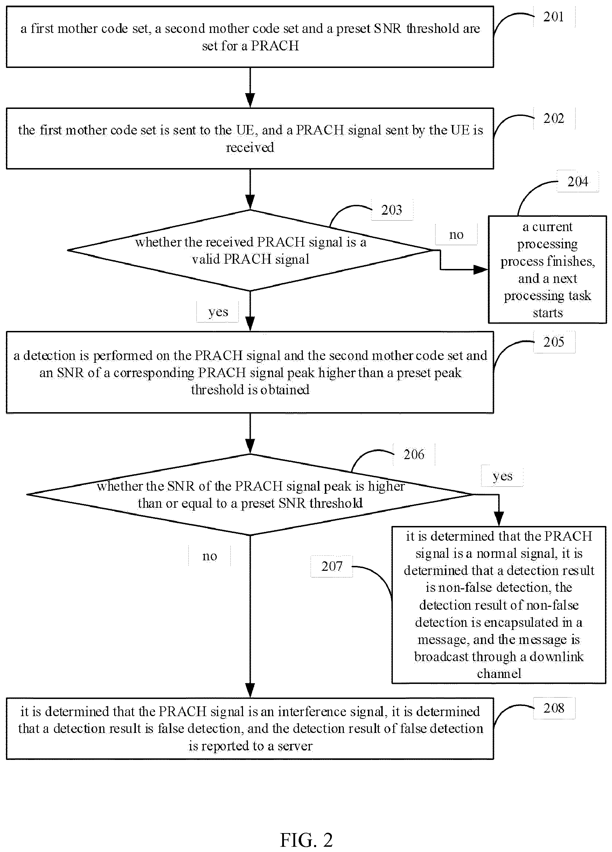

FIG. 2 is a flowchart of a detection method for identifying false detection caused by interference according to an embodiment two of the present invention. As shown in FIG. 2, the detection method for identifying false detection caused by interference provided by the embodiments of the present invention may be applied to an apparatus. The apparatus may be a base station. The method includes steps 201 to 208 described below.

In step 201, a first mother code set, a second mother code set and a preset SNR threshold are set for a PRACH.

The base station randomly sets a first mother code set and a second mother code set for a PRACH according to a mother code sequence of the PRACH, and the base station sets a preset SNR threshold. The first mother code set includes N mother codes in the mother code sequence, and the second mother code set includes M mother codes in the mother code sequence other than the N mother codes. N is less than M, and N and M are natural numbers. The first mother code set is used for random access of a UE, and the second mother code set is used for performing a detection for false detection on a feedback signal of the UE.

The preset SNR threshold may be set according to actual requirements, which is not limited herein.

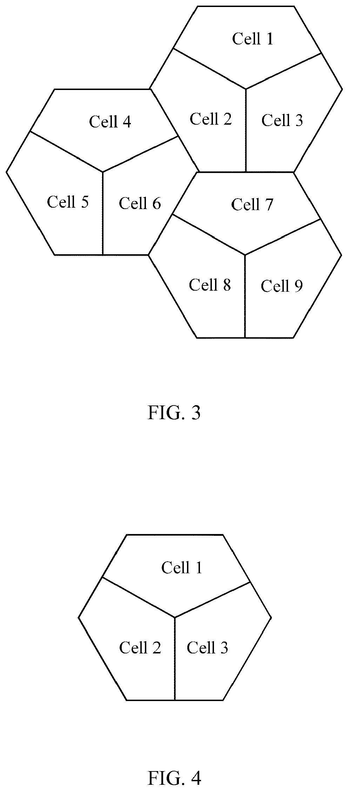

FIG. 3 is a schematic diagram one of co-frequency networking of multiple cells of a detection method for identifying false detection caused by interference according to the present invention. As shown in FIG. 3, in the co-frequency networking of multiple cells, the basic configuration of cells is as follows: a time division duplexing (TDD) mode, a subframe ratio of 2, PRACH configuration of Format0, and the NCS configuration of 6. The time domain resources of PRACHs of these nine cells are staggered from each other, and the first mother code sets (i.e., physical root sequence indexes) configured to the UE by the base station for random access and the second mother code sets for detection of false detection are set differently, as shown in Table 1.

**Table 1**

| Cell ID | PRACH configuration Index | First mother code set (physical root sequence indexes) | Second mother code set |
|---|---|---|---|
| 1 | 0 | {710, 711, 712} | {22, 33, 128, 332, 567, 598, 601, 678, 704} |
| 2 | 1 | {217, 218, 219} | {2, 15, 17, 28, 39, 49, 398, 549, 812} |
| 3 | 2 | {18, 19, 20} | {7, 29, 36, 44, 76, 138, 295, 365, 672} |
| 4 | 0 | {54, 55, 56} | {51, 68, 82, 99, 153, 276, 327, 498, 765} |
| 5 | 1 | {108, 109, 110} | {9, 11, 19, 37, 45, 175, 228, 345, 865} |
| 6 | 2 | {432, 433, 434} | {23, 44, 53, 67, 298, 331, 376, 453, 675} |
| 7 | 0 | {35, 36, 37} | {32, 39, 48, 51, 132, 164, 274, 339, 375} |
| 8 | 1 | {589, 590, 591} | {29, 541, 598, 662, 687, 721, 763, 812, 836} |
| 9 | 2 | {83, 84, 85} | {13, 33, 41, 55, 128, 173, 386, 417, 672} |

In step 201, under a condition of co-frequency networking of K cells, the base station may set first mother code sets of the K cells according to a mother code sequence of the PRACH, where each of the first mother code sets of the K cells includes no repeated mother code, and K is a positive integer greater than or equal to 3; and according to a combination set of first mother code sets of adjacent K-1 cells of a current cell, a second mother code set corresponding to the current cell is obtained. The first mother code set includes N mother codes in the mother code sequence, and the second mother code set includes M mother codes in the mother code sequence other than the N mother codes. N is less than M, and N and M are natural numbers. For example, FIG. 4 is a schematic diagram two of co-frequency networking of multiple cells of a detection method for identifying false detection caused by interference according to the present invention. As shown in FIG. 4, when the base station is in the co-frequency networking of K=3 cells, the PRACH time-frequency resources, the first mother code sets and the second mother code sets of adjacent cells may be mutually known by each other.

A present cell may detect a power interference level of PRACH signal information of an adjacent cell by using the method disclosed in the present invention. These three cells are all configured as follows: TDD, a subframe ratio of 2, PRACH configuration of Format0, and NCS configuration of 6. The first mother code sets (i.e., physical root sequence indexes) configured to the UE by the base station in a present cell for random access and the second mother code sets for the detection of false detection are shown in Table 2.

**Table 2**

| Cell ID | PRACH configuration Index | First mother code set (physical root sequence indexes) | Second mother code set |
|---|---|---|---|
| 1 | 0 | {710, 711, 712} | {18, 19, 20, 217, 218, 219} |
| 2 | 1 | {217, 218, 219} | {18, 19, 20, 710, 711, 712} |
| 3 | 2 | {18, 19, 20} | {217, 218, 219, 710, 711, 712} |

As shown in Table 2, the time domain resources of PRACHs of these three cells are staggered from each other, the first mother code sets configured to the UE for random access are set to be different, and each cell takes a combination set of respective first mother code sets of two adjacent cells as the second mother code resource for the detection of false detection. Using the cell 1 as an example: the first mother code set of the cell 1 is configured as {710, 711, 712}, then the second mother code set is configured as the combination set of the first mother code set {217, 218, 219} of the cell 2 and the first mother code set {18, 19, 20} of the cell 3, i.e. {18, 19, 20,217,218,219}.

In step 202, the first mother code set is sent to the UE, and a PRACH signal sent by the UE is received.

The base station sends the first mother code set in step 201 to the UE, and the UE randomly selects mother codes from the first mother code set and performs random access with the base station according to the selected mother codes. That is, the UE sends a fed back PRACH signal to the base station, and the base station receives the PRACH signal sent from the UE.

In step 203, whether the received PRACH signal is a valid PRACH signal is determined.

After the base station receives the PRACH signal sent from the UE, the base station may determine whether the received PRACH signal is a valid PRACH signal according to the first mother code set, that is, to perform correlation detection. The base station first performs a correlation detection according to the first mother code set and the received PRACH signal to obtain a first time domain correlation value sequence; and then, each correlation value in the first time domain correlation value sequence is compared with the preset peak threshold independently, whether the first time domain correlation value sequence has a correlation value higher than the preset peak threshold is determined, and if the first time domain correlation value sequence has no correlation value higher than the preset peak threshold, it is determine that the PRACH signal is not the valid PRACH signal, and then go to step 204; and if the first time domain correlation value sequence has a correlation value higher than the preset peak threshold, it is determined that the PRACH signal is the valid PRACH signal, and then go to step 205.

In step 204, a current processing process finishes, and a next processing task starts.

The base station determines to finish the current processing process and start a processing task for the detection.

In step 205, a detection is performed on the PRACH signal and the second mother code set and an SNR of a corresponding PRACH signal peak higher than a preset peak threshold is obtained. When it is determined that the PRACH signal is the valid PRACH signal according to the first mother code set, the base station performs a correlation detection on the PRACH signal and the second mother code set and obtains, through calculation, the SNR of the corresponding PRACH signal peak higher than the preset peak threshold. The base station first performs a correlation detection on the PRACH signal and the second mother code set to obtain a second time domain correlation value sequence; and then each correlation value in the second time domain correlation value sequence is compared with the preset peak threshold independently, whether the second time domain correlation value sequence has a correlation value higher than the preset peak threshold is determined, and if the second time domain correlation value sequence has a correlation value higher than the preset peak threshold, the SNR of the PRACH signal peak corresponding to the correlation value higher than the preset peak threshold is calculated; and if the second time domain correlation value sequence has no correlation value higher than the preset peak threshold, the related SNR is not calculated.

Finally, the SNR of the PRACH signal peak is obtained.

The preset peak threshold may be set according to actual requirements, which is not limited herein.

In step 206, whether the SNR of the PRACH signal peak is higher than or equal to a preset SNR threshold is determined.

The base station determines whether the SNR of the PRACH signal peak is higher than or equal to the preset SNR threshold, and if the SNR of the PRACH signal peak is higher than or equal to the preset SNR threshold, go to step 207; and if the SNR of the PRACH signal peak is lower than the preset SNR threshold, go to step 208.

In step 207, it is determined that the PRACH signal is a normal signal, it is determined that a detection result is non-false detection, the detection result of non-false detection is encapsulated in a message, and the message is broadcast through a downlink channel.

The base station determines that the PRACH signal is a normal signal, determines that a detection result is non-false detection, encapsulates the detection result of non-false detection in a message, and broadcasts the message through a downlink channel. The UE sending the PRACH signal will continue the subsequent access process according to the protocol process after the UE hears the message. That is, the base station will allocate an uplink bandwidth to the UE for normal communication.

In step 208, it is determined that the PRACH signal is an interference signal, it is determined that a detection result is false detection, and the detection result of false detection is reported to a server.

The base station determines that the PRACH signal is an interference signal, determines that a detection result is false detection and reports the detection result of false detection to a server. The server counts the detection result of false detection to reflect an interference level of the base station system PRACH signal.

In the detection method for identifying false detection caused by interference provided in the embodiments of the present invention, the base station sets a first mother code set, a second mother code set and a preset SNR threshold for a PRACH; sends the first mother code set to a UE, and receives a PRACH signal sent by the UE; determines whether the PRACH signal is a valid PRACH signal; if the PRACH signal is not a valid PRACH signal, finishes the current processing process and starts a processing task for the detection; if the PRACH signal is a valid PRACH signal, a detection is performed on the PRACH signal and the second mother code set and an SNR of a corresponding PRACH signal peak higher than a preset peak threshold is obtained; determines whether the SNR of the PRACH signal peak is higher than or equal to the preset SNR threshold; if so, determines that the PRACH signal is a normal signal, determines that a detection result is non-false detection, encapsulates the detection result of non-false detection in a message, and broadcasts the message through a downlink channel; and if not, determines that the PRACH signal is an interference signal, determines that a detection result is false detection, and reports the detection result of false detection to a server. Compared with the related art, the present invention performs detection using an unconfigured mother code and the received PRACH signal to determine whether it is false detection, and identifies false detection caused by interference using the principle of low correlation between random access preamble sequences and high correlation between interference and multiple random access preamble sequences, which may suppress the false detection caused by the interference to a certain extent without raising the SNR detection threshold of the PRACH signal peak, thereby effectively improving the UE access success rate, avoiding the uplink bandwidth waste, and saving the system capacity.

On the basis of the above-mentioned embodiments, scenario applications will be exemplified.

### Scenario one

A first mother code set {436, 437, 438}, a second mother code set {14, 22, 210, 548, 627} and a preset threshold of -13 db are set at a site A.

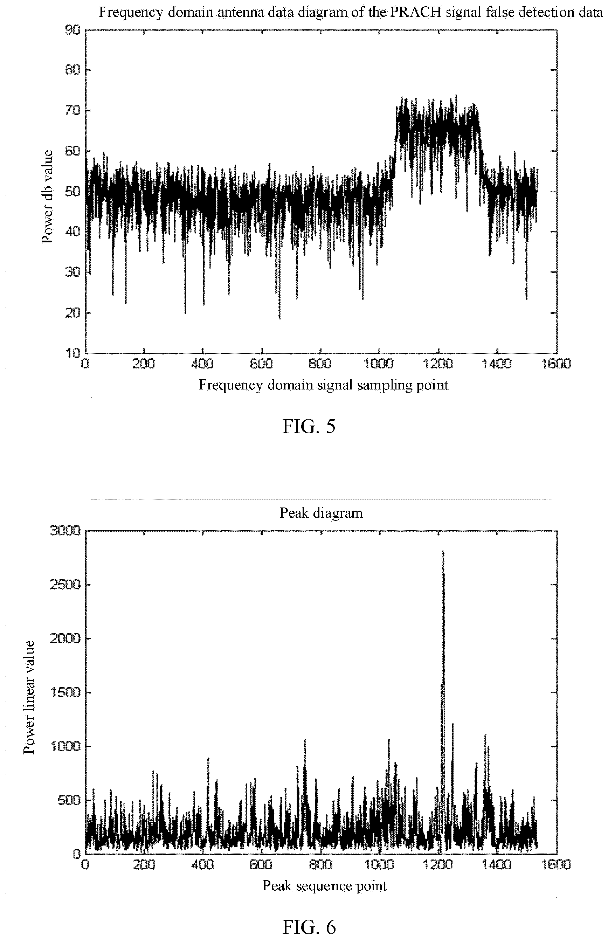

FIG. 5 is a data diagram one of scenario one of a detection method for identifying false detection caused by interference according to the present invention. PRACH signals collected at the site A, which may be observed in the frequency domain and have a false detection caused by an interference signal, are as shown in the frequency domain antenna data diagram of the PRACH signal false detection data in FIG. 5. In FIG. 5, the horizontal coordinate indicates the frequency domain signal sampling point, and the vertical coordinate indicates the power db value.

FIG. 6 is a data diagram two of scenario one of a detection method for identifying false detection caused by interference according to the present invention. The site A base station performs a correlation detection using the PRACH signal and a first mother code set {436, 437, 438} set in advance. The PRACH signal has two peaks, and an SNR of one peak is -13.5 db and an SNR of the other peak is -17 db, as shown in a peak diagram in FIG. 6. In FIG. 6, the horizontal coordinate indicates the peak sequence point, and the vertical coordinate indicates the power linear value.

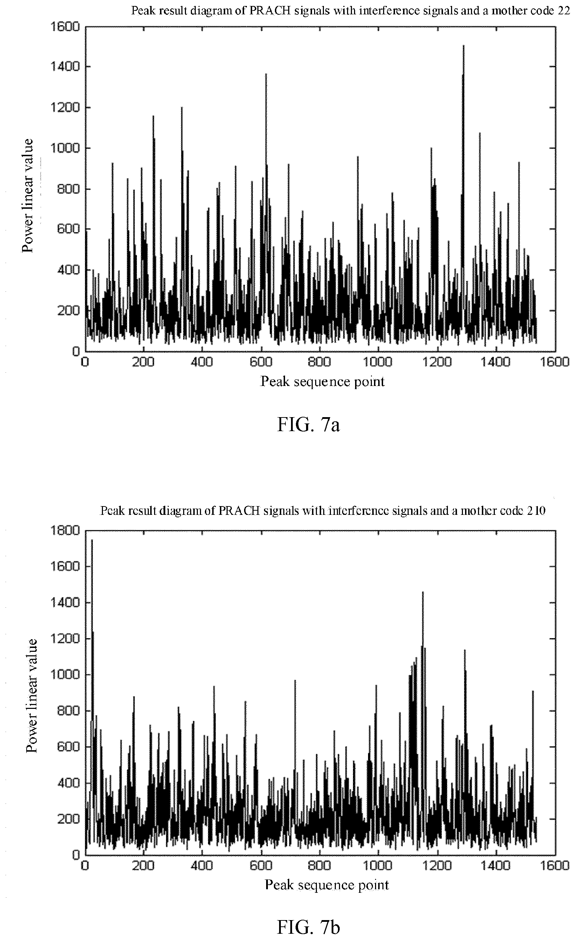

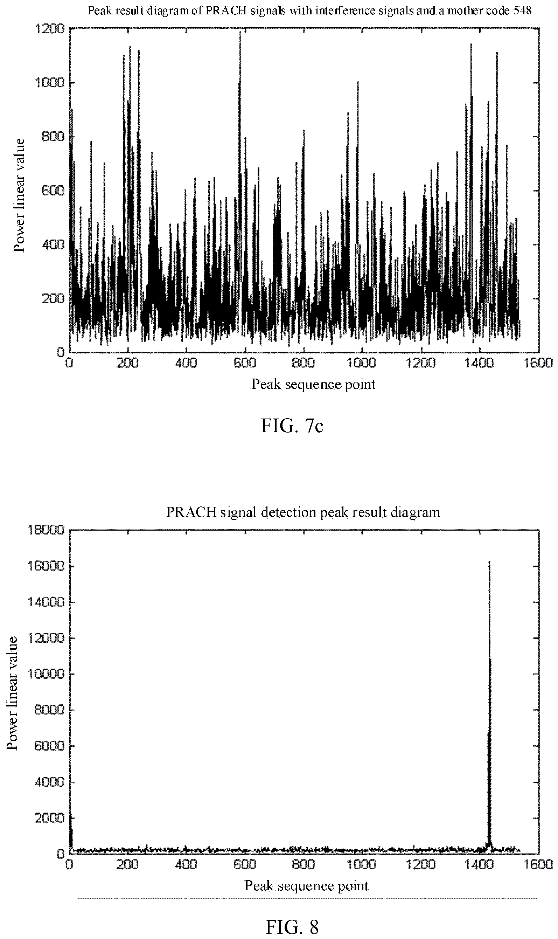

FIG. 7a is a data diagram three of scenario one of a detection method for identifying false detection caused by interference according to the present invention. FIG. 7b is a data diagram four of scenario one of a detection method for identifying false detection caused by interference according to the present invention. FIG. 7c is a data diagram five of scenario one of a detection method for identifying false detection caused by interference according to the present invention. The site A base station performs a correlation detection using the PRACH signal and a second mother code set {14, 22, 210, 548, 627} set in advance, calculates an SNR of an PRACH signal peak, and finally obtains that mother codes 22, 210 and 548 in the second mother code set all can detect SNRs of two peaks of the PRACH signal. SNRs of the two peaks are about -17 db, as shown in a peak result diagram of PRACH signals with interference signals and the mother code 22 in FIG. 7a, a peak result diagram of PRACH signals with interference signals and the mother code 210 in FIG. 7b, and a peak result diagram of PRACH signals with interference signals and the mother code 548 in FIG. 7c. In these figures, the horizontal coordinate indicates the peak sequence point, and the vertical coordinate indicates the power linear value.

Finally, since the PRACH signal peak detected by the first mother code set of the base station may also be detected by the second mother code set, and the SNRs of the detected peaks do not exceed the preset threshold of -13 db, the base station may determine that both the detected peaks are false detections.

### Scenario two

A first mother code set {436, 437, 438}, a second mother code set {14, 22, 30, 548, 627} and a preset threshold of -13 db are set at a site B.

FIG. 8 is a data diagram of scenario two of a detection method for identifying false detection caused by interference according to the present invention. The site B collects PRACH signals whose peaks can be detected. As shown in a PRACH signal detection peak result diagram in FIG. 8, the horizontal coordinate indicates the peak sequence point, and the vertical coordinate indicates the power linear value. The frame data detects two preambles. The site B base station performs a correlation detection using the two preambles and a first mother code set {436, 437, 438} set in advance, and obtains that SNRs of the two preambles are -17 db and -8.25 db respectively.

Then, the site B base station performs a correlation detection using the frame data and the second mother code set {14, 22, 30, 548, 627} set in advance, and finally does not detect the PRACH signal peak of the frame data, so that the base station may determine that the two detected preambles are not false detections caused by interference.

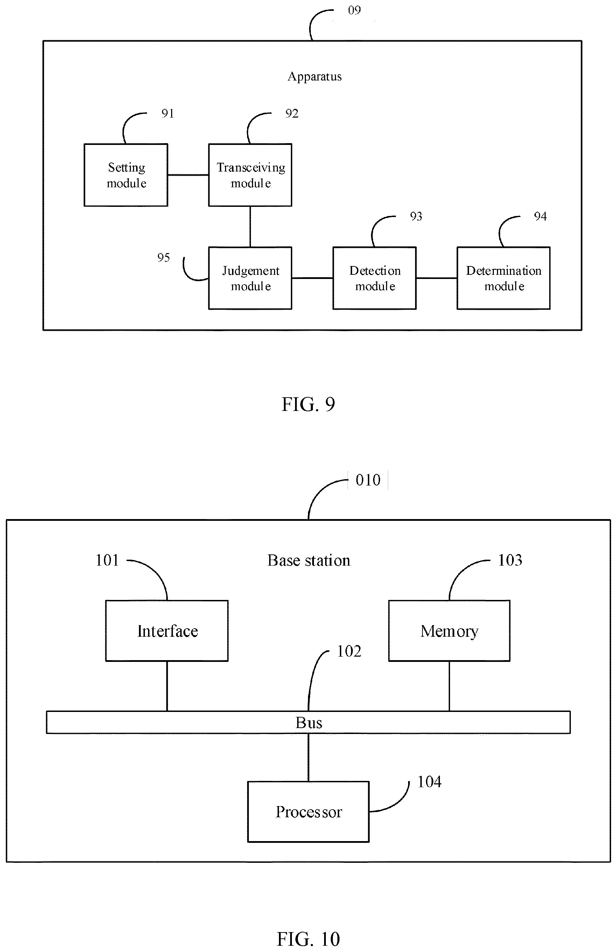

FIG. 9 is a structural diagram of an apparatus according to an embodiment of the present invention. As shown in FIG. 9, the apparatus 09 provided by the embodiment of the present invention includes a setting module 91, a transceiving module 92, a detection module 93 and a determination module 94.

The setting module 91 is configured to set a first mother code set, a second mother code set and a preset SNR threshold for a PRACH.

The transceiving module 92 is configured to send the first mother code set to a UE, and receive a PRACH signal sent by the UE.

The detection module 93 is configured to,in case of determining that the PRACH signal is a valid PRACH signal according to the first mother code set, perform a detection on the PRACH signal and the second mother code set and obtain an SNR of a corresponding PRACH signal peak higher than a preset peak threshold.

The determination module 94 is configured to determine whether the PRACH signal is an interference signal causing false detection according to the SNR of the PRACH signal peak and the preset SNR threshold.

The first mother code set may include N mother codes in a mother code sequence, and the second mother code set may include M mother codes in the mother code sequence other than the N mother codes, where N is less than M, and N and M are natural numbers.

The determination module 94 may be configured to determine whether the SNR of the PRACH signal peak is higher than or equal to the preset SNR threshold, and if the SNR of the PRACH signal peak is higher than or equal to the preset SNR threshold, determine that the PRACH signal is a normal signal; and if the SNR of the PRACH signal peak is lower than the preset SNR threshold, determine that the PRACH signal is the interference signal causing the false detection.

The transceiving module 92 may further be configured to determine that a detection result is the false detection, and report the detection result of false detection to a server.

The transceiving module 92 may further be configured to determine that a detection result is non-false detection, encapsulate the detection result of non-false detection in a message, and broadcasts the message through a downlink channel.

The apparatus may further include a judgement module 95.

The judgement module 95 is configured to perform a correlation detection on the PRACH signal and the first mother code set to obtain a first time domain correlation value sequence; and compare each correlation value in the first time domain correlation value sequence with the preset peak threshold independently, determine whether the first time domain correlation value sequence has a correlation value higher than the preset peak threshold, and if the first time domain correlation value sequence has the correlation value higher than the preset peak threshold, determine that the PRACH signal is the valid PRACH signal.

The judgement module 95 may further be configured to perform a correlation detection on the PRACH signal and the second mother code set to obtain a second time domain correlation value sequence; and compare each correlation value in the second time domain correlation value sequence with the preset peak threshold independently, determine whether the second time domain correlation value sequence has a correlation value higher than the preset peak threshold, and if the second time domain correlation value sequence has the correlation value greater than the preset peak threshold, obtain, through calculation, an SNR of a PRACH signal peak corresponding to the correlation value higher than the preset peak threshold.

The setting module 91 may be configured to, under a condition of co-frequency networking of K cells, set first mother code sets of the K cells according to a mother code sequence of the PRACH, where each of the first mother code sets of the K cells includes no repeated mother code, and K is a positive integer greater than or equal to 3; and according to a combination set of first mother code sets of adjacent K-1 cells of a current cell, obtain a second mother code set corresponding to the current cell.

The setting module may be configured to set randomly the first mother code set and the second mother code set for the PRACH within a preset time period.

The apparatus provided in the embodiments of the present invention may be configured to execute the technical solutions in the above-mentioned embodiments directed to methods. The implementation principle and technical effects are similar and thus will not be repeated here again.

In practical applications, the setting module 91, the transceiving module 92, the detection module 93, the determination module 94 and the judgement module 95 may all be implemented by a central processing unit (CPU), a micro processor unit (MPU), a digital signal processor (DSP), or a field programmable gate array (FPGA) located in the apparatus 09.

FIG. 10 is a structural diagram of a base station according to an embodiment of the present invention. As shown in FIG. 10, the base station 010 provided by the embodiment of the present invention includes an interface 101, a bus 102, a memory 103 and a processor 104. The interface 101, the memory 103 and the processor 104 are connected through the bus 102. The memory 103 is configured to store instructions. The processor 104 reads the instructions to:
set a first mother code set, a second mother code set and a preset SNR threshold for a PRACH;
send the first mother code set to a UE, and receive a PRACH signal sent by the UE;
in case of determining that the PRACH signal is a valid PRACH signal according to the first mother code set,perform a detection on the PRACH signal and the second mother code set and obtain an SNR of a corresponding PRACH signal peak higher than a preset peak threshold; and
determine whether the PRACH signal is an interference signal causing false detection according to the SNR of the PRACH signal peak and the preset SNR threshold.

The first mother code set may include N mother codes in a mother code sequence, and the second mother code set may include M mother codes in the mother code sequence other than the N mother codes, where N is less than M, and N and M are natural numbers.

The processor 104 further reads the instructions to:
determine whether the SNR of the PRACH signal peak is higher than or equal to the preset SNR threshold, and if the SNR of the PRACH signal peak is higher than or equal to the preset SNR threshold, determine that the PRACH signal is a normal signal; and
if the SNR of the PRACH signal peak is lower than the preset SNR threshold, determine that the PRACH signal is an interference signal causing the false detection.

The processor 104 further reads the instructions to:
determine that a detection result is the false detection, and report the detection result of false detection to a server.

The processor 104 further reads the instructions to:
determine that a detection result is non-false detection, encapsulate the detection result of non-false detection in a message, and broadcasts the message through a downlink channel.

The processor 104 further reads the instructions to:
perform a correlation detection on the PRACH signal and the first mother code set to obtain a first time domain correlation value sequence; and
compare each correlation value in the first time domain correlation value sequence with the preset peak e threshold independently, determine whether the first time domain correlation value sequence has a correlation value higher than the preset peak threshold, and if the first time domain correlation value sequence has the correlation value higher than the preset peak threshold, determine that the PRACH signal is the valid PRACH signal.

The processor 104 further reads the instructions to:
perform a correlation detection on the PRACH signal and the second mother code set to obtain a second time domain correlation value sequence; and
compare each correlation value in the second time domain correlation value sequence with the preset peak threshold independently, determine whether the second time domain correlation value sequence has a correlation value higher than the preset peak threshold, and if the second time domain correlation value sequence has the correlation value higher than the preset peak threshold, obtain, through calculation, an SNR of a PRACH signal peak corresponding to the correlation value higher than the preset peak threshold.

The processor 104 further reads the instructions to:
under a condition of co-frequency networking of K cells, set first mother code sets of the K cells according to a mother code sequence of the PRACH, where each of the first mother code sets of the K cells includes no repeated mother code, and K is a positive integer greater than or equal to 3; and
according to a combination set of first mother code sets of adjacent K-1 cells of a current cell, obtain a second mother code set corresponding to the current cell.

The processor 104 further reads the instructions to:
set randomly the first mother code set and the second mother code set for the PRACH within a preset time period.

The apparatus for detecting an interference signal provided in the embodiment of the present invention may be configured to execute the technical solutions in the above-mentioned embodiments directed to methods. The implementation principle and technical effects are similar and thus will not be repeated here again.

In addition, the embodiments of the present invention further provide a computer-readable storage medium configured to store computer-executable instructions for executing the detection method for identifying false detection caused by interference applied to an apparatus when executed by a processor.

The embodiments of the present invention further provide a computer-readable storage medium configured to store computer-executable instructions for executing the detection method for identifying false detection caused by interference applied to a base station when executed by a processor.

The computer-readable storage medium may be a transient computer-readable storage medium or a non-transient computer-readable storage medium.

It should be understood by those skilled in the art that the embodiments of the present invention may be provided as methods, systems or computer program products. Therefore, the present invention may be implemented by hardware, software, or a combination of hardware and software. In addition, the present invention may take the form of a computer program product implemented in one or more computer-usable storage media (including, but not limited to, a disk memory and an optical memory) that includes computer-usable program codes.

The present invention is described with reference to flowcharts and/or block diagrams of methods, devices (systems) and computer program products according to the embodiments of the present invention. It should be understood that computer program instructions may implement each flow and/or block in the flowcharts and/or block diagrams and a combination of flows and/or blocks in the flowcharts and/or block diagrams. These computer program instructions may be provided to a general-purpose computer, a special-purpose computer, an embedded processor or a processor of another programmable data processing device to produce a machine so that instructions executed by a computer or the processor of another programmable data processing device produce a means for implementing functions specified in one or more flows in the flowcharts and/or one or more blocks in the block diagrams.

These computer program instructions may also be stored in a computer-readable memory which may direct the computer or another programmable data processing device to operate in a particular manner so that the instructions stored in the computer-readable memory produce a manufactured product including an instructing means. The instructing means implements the functions specified in one or more flows in the flowcharts and/or one or more blocks in the block diagrams.

These computer program instructions may also be loaded onto the computer or another programmable data processing device so that a series of operation steps are performed on the computer or another programmable device to produce processing implemented by the computer. Therefore, instructions executed on the computer or another programmable device provide steps for implementing the functions specified in one or more flows in the flowcharts and/or one or more blocks in the block diagrams.

The above are only embodiments of the present invention and are not intended to limit the scope of the present invention.

It is to be noted that as used herein, the term "comprising", "including" or any other variant thereof is intended to encompass a non-exclusive inclusion so that a process, method, article or apparatus that includes a series of elements not only includes the expressly listed elements but also includes other elements that are not expressly listed or are inherent to such a process, method, article or apparatus. In the absence of more restrictions, the elements defined by the statement "including a ..." do not exclude the presence of additional identical elements in the process, method, article or apparatus that includes the elements.

The serial numbers of the embodiments described above of the present invention are merely for ease of description and do not indicate superiority and inferiority of the embodiments.

From the description of the embodiments described above, it will be apparent to those skilled in the art that the method of any embodiment described above may be implemented by means of software plus a necessary general-purpose hardware platform, or may of course be implemented by hardware. Based on this understanding, the solutions provided by the present invention substantially, or the part contributing to the related art, may be embodied in the form of a software product. The computer software product is stored in a storage medium (such as a read-only memory (ROM)/random access memory (RAM), a magnetic disk or an optical disk) and includes several instructions for enabling a terminal device (which may be a mobile phone, a computer, a server, an air conditioner, a network device, or the like) to execute the method according to each embodiment of the present invention.

The above are only preferred embodiments of the present invention and are not intended to limit the scope of the present invention. Direct or indirect utilization of the specification and drawings of the present invention in equivalent structural variations or equivalent process variations or in the related art without departing from the spirit of the present invention is within the scope of the present invention.

### INDUSTRIAL APPLICABILITY

The detection method and apparatus for identifying false detection caused by interference, and a base station disclosed by the present invention may suppress the false detection caused by the interference to a certain extent without raising the PRACH detection threshold, thereby reducing the false detection without reducing the user access success rate.

## Claims

1. A detection method for identifying false detection caused by interference, comprising:
setting a first mother code set, a second mother code set and a preset signal-to-noise ratio, SNR, threshold for a physical random access channel, PRACH;
sending the first mother code set to a user equipment, UE, and receiving a PRACH signal sent by the UE;
in case of determining that the PRACH signal is a valid PRACH signal according to the first mother code set, performing a detection on the PRACH signal and the second mother code set, and obtaining an SNR of a corresponding PRACH signal peak higher than a preset peak threshold; and
determining whether the PRACH signal is an interference signal causing a false detection according to the SNR of the PRACH signal peak and the preset SNR threshold.

2. The detection method of claim 1, wherein the first mother code set comprises N mother codes in a mother code sequence, and the second mother code set comprises M mother codes in the mother code sequence other than the N mother codes, wherein N is less than M, and N and M are natural numbers.

3. The detection method of claim 1, wherein the determining whether the PRACH signal is the interference signal causing the false detection according to the SNR of the PRACH signal peak and the preset SNR threshold comprises:
determining whether the SNR of the PRACH signal peak is higher than or equal to the preset SNR threshold;
if the SNR of the PRACH signal peak is higher than or equal to the preset SNR threshold, determining that the PRACH signal is a normal signal; and
if the SNR of the PRACH signal peak is lower than the preset SNR threshold, determining that the PRACH signal is the interference signal causing the false detection.

4. The detection method of claim 3, wherein after the determining that the PRACH signal is the interference signal causing the false detection, the detection method further comprises:
determining that a detection result is the false detection, and reporting the detection result of the false detection to a server.

5. The detection method of claim 3, wherein after the determining that the PRACH signal is the normal signal, the detection method further comprises:
determining that a detection result is a non-false detection, encapsulating the detection result of the non-false detection in a message, and broadcasting the message through a downlink channel.

6. The detection method of claim 1, wherein the determining that the PRACH signal is the valid PRACH signal according to the first mother code set comprises:
performing a correlation detection on the PRACH signal and the first mother code set to obtain a first time domain correlation value sequence; and
comparing each correlation value in the first time domain correlation value sequence with the preset peak threshold independently, determining whether the first time domain correlation value sequence has a correlation value higher than the preset peak threshold, and if the first time domain correlation value sequence has the correlation value higher than the preset peak threshold, determining that the PRACH signal is the valid PRACH signal.

7. The detection method of claim 6, wherein the performing the detection on the PRACH signal and the second mother code set and the obtaining the SNR of the corresponding PRACH signal peak higher than the preset peak threshold comprise:
performing a correlation detection on the PRACH signal and the second mother code set to obtain a second time domain correlation value sequence; and
comparing each correlation value in the second time domain correlation value sequence with the preset peak threshold independently, determining whether the second time domain correlation value sequence has a correlation value higher than the preset peak threshold, and if the second time domain correlation value sequence has the correlation value higher than the preset peak threshold, obtaining, through calculation, the SNR of a PRACH signal peak corresponding to the correlation value higher than the preset peak threshold.

8. The detection method of claim 1, wherein the setting the first mother code set and the second mother code set for the PRACH comprises:
under a condition of co-frequency networking of K cells, setting first mother code sets of the K cells according to a mother code sequence of the PRACH, wherein each of the first mother code sets of the K cells comprises no repeated mother code, and K is a positive integer greater than or equal to 3; and
according to a combination set of first mother code sets of adjacent K-1 cells of a current cell, obtaining a second mother code set corresponding to the current cell.

9. The detection method of any one of claims 1 to 8, wherein the setting the first mother code set and the second mother code set for the PRACH comprises:
setting the first mother code set and the second mother code set randomly for the PRACH within a preset time period.

10. An apparatus, comprising:
a setting module, which is configured to set a first mother code set, a second mother code set and a preset signal-to-noise ratio, SNR, threshold for a physical random access channel, PRACH;
a transceiving module, which is configured to send the first mother code set to a user equipment, UE, and receive a PRACH signal sent by the UE;
a detection module, which is configured to, in case of determining that the PRACH signal is a valid PRACH signal according to the first mother code set, perform a detection on the PRACH signal and the second mother code set and obtain an SNR of a corresponding PRACH signal peak higher than a preset peak threshold; and
a determination module, which is configured to determine whether the PRACH signal is an interference signal causing a false detection according to the SNR of the PRACH signal peak and the preset SNR threshold.

11. The apparatus of claim 10, wherein the first mother code set comprises N mother codes in a mother code sequence, and the second mother code set comprises M mother codes in the mother code sequence other than the N mother codes, wherein N is less than M, and N and M are natural numbers.

12. The apparatus of claim 10, wherein the determination module is configured to:
determine whether the SNR of the PRACH signal peak is higher than or equal to the preset SNR threshold;
if the SNR of the PRACH signal peak is higher than or equal to the preset SNR threshold, determine that the PRACH signal is a normal signal; and
if the SNR of the PRACH signal peak is lower than the preset SNR threshold, determine that the PRACH signal is the interference signal causing the false detection.

13. The apparatus of claim 12, wherein the transceiving module is further configured to determine that a detection result is the false detection, and report the detection result of the false detection to a server.

14. The apparatus of claim 12, wherein the transceiving module is further configured to determine that a detection result is a non-false detection, encapsulate the detection result of the non-false detection in a message, and broadcast the message through a downlink channel.

15. The apparatus of claim 10, further comprising:
a judgement module, which is configured to:
perform a correlation detection on the PRACH signal and the first mother code set to obtain a first time domain correlation value sequence; and
compare each correlation value in the first time domain correlation value sequence with the preset peak threshold independently, determine whether the first time domain correlation value sequence has a correlation value higher than the preset peak threshold, and if the first time domain correlation value sequence has the correlation value higher than the preset peak threshold, determine that the PRACH signal is the valid PRACH signal.

16. The apparatus of claim 15, wherein the judgement module is further configured to:
perform a correlation detection on the PRACH signal and the second mother code set to obtain a second time domain correlation value sequence; and
compare each correlation value in the second time domain correlation value sequence with the preset peak threshold independently, determine whether the second time domain correlation value sequence has a correlation value higher than the preset peak threshold, and if the second time domain correlation value sequence has the correlation value higher than the preset peak threshold, obtain, through calculation, an SNR of a PRACH signal peak corresponding to the correlation value higher than the preset peak threshold.

17. The apparatus of claim 10, wherein the setting module is configured to, under a condition of co-frequency networking of K cells, set first mother code sets of the K cells according to a mother code sequence of the PRACH, wherein each of the first mother code sets of the K cells comprises no repeated mother code, and K is a positive integer greater than or equal to 3; and according to a combination set of first mother code sets of adjacent K-1 cells of a current cell, obtain a second mother code set corresponding to the current cell.

18. The apparatus of any one of claims 10 to 17, wherein the setting module is configured to set the first mother code set and the second mother code set randomly for the PRACH within a preset time period.

19. A base station, comprising an interface, a bus, a memory and a processor, wherein the interface, the memory and the processor are connected through the bus, the memory is configured to store instructions, and the processor reads the instructions to:
set a first mother code set, a second mother code set and a preset signal-to-noise ratio, SNR, threshold for a physical random access channel, PRACH;
send the first mother code set to a user equipment, UE, and receive a PRACH signal sent by the UE;
in case of determining that the PRACH signal is a valid PRACH signal according to the first mother code set, perform a detection on the PRACH signal and the second mother code set and obtain an SNR of a corresponding PRACH signal peak higher than a preset peak threshold; and
determine whether the PRACH signal is an interference signal causing a false detection according to the SNR of the PRACH signal peak and the preset SNR threshold.

20. The base station of claim 19, wherein the first mother code set comprises N mother codes in a mother code sequence, and the second mother code set comprises M mother codes in the mother code sequence other than the N mother codes, wherein N is less than M, and N and M are natural numbers.

21. The base station of claim 19, wherein the processor reads the instructions to:
determine whether the SNR of the PRACH signal peak is higher than or equal to the preset SNR threshold;
if the SNR of the PRACH signal peak is higher than or equal to the preset SNR threshold, determine that the PRACH signal is a normal signal; and
if the SNR of the PRACH signal peak is lower than the preset SNR threshold, determine that the PRACH signal is the interference signal causing the false detection.

22. The base station of claim 21, wherein the processor further reads the instructions to:
determine that a detection result is the false detection, and report the detection result of the false detection to a server.

23. The base station of claim 21, wherein the processor further reads the instructions to:
determine that a detection result is a non-false detection, encapsulate the detection result of the non-false detection in a message, and broadcast the message through a downlink channel.

24. The base station of claim 19, wherein the processor reads the instructions to:
perform a correlation detection on the PRACH signal and the first mother code set to obtain a first time domain correlation value sequence; and
compare each correlation value in the first time domain correlation value sequence with the preset peak threshold independently, determine whether the first time domain correlation value sequence has a correlation value higher than the preset peak threshold, and if the first time domain correlation value sequence has the correlation value higher than the preset peak threshold, determine that the PRACH signal is the valid PRACH signal.

25. The base station of claim 24, wherein the processor further reads the instructions to:
perform a correlation detection on the PRACH signal and the second mother code set to obtain a second time domain correlation value sequence; and
compare each correlation value in the second time domain correlation value sequence with the preset peak threshold independently, determine whether the second time domain correlation value sequence has a correlation value higher than the preset peak threshold, and if the second time domain correlation value sequence has the correlation value higher than the preset peak threshold, obtain, through calculation, an SNR of a PRACH signal peak corresponding to the correlation value higher than the preset peak threshold.

26. The base station of claim 19, wherein the processor reads the instructions to:
under a condition of co-frequency networking of K cells, set first mother code sets of the K cells according to a mother code sequence of the PRACH, wherein each of the first mother code sets of the K cells comprises no repeated mother code, and K is a positive integer greater than or equal to 3; and
according to a combination set of first mother code sets of adjacent K-1 cells of a current cell, obtain a second mother code set corresponding to the current cell.

27. The base station of any one of claims 19 to 26, wherein the processor reads the instructions to:
set the first mother code set and the second mother code set randomly for the PRACH within a preset time period.

28. A computer-readable storage medium, which is configured to store computer-executable instructions for executing the detection method of any one of claims 1 to 9.
